# EUROPEAN PATENT APPLICATION

(11) **EP 2 466 421 A1**
(43) Date of publication of application: **20.06.2012**
(21) Application number: 10194572.3
(22) Date of filing: 10.12.2010
(51) Int. Cl.: G06F 3/023, G06F 3/048, G06F 3/01

(54) **Systems and methods for input into a portable electronic device**

(71) Applicant: Research In Motion Limited, Waterloo, ON N2L 3W8 (CA)
(72) Inventor: Martin-Cocher, Gaelle, Christine, Mississauga Ontario L4W 5P1 (CA); Scott, Sherryl, Lee, Lorraine, Waterloo Ontario N2L 3W8 (CA)
(74) Representative: MERH-IP Matias Erny Reichl Hoffmann

(57) **Abstract**

Methods and systems for selecting input in a portable electronic device comprising a display and a plurality of input members are disclosed. The methods and system use semi-transparent windows displayed in partially overlapping layers to present output options to the user of the device. For example, the method includes detecting a pre-determined type of actuation of one of the input members of the electronic device and determining the representations associated with the actuated input member. The method further includes outputting the representations using the display, each representation appearing in a semi-transparent window, the semi-transparent windows being displayed in partially overlapping layers. The method further includes receiving a selection input and outputting the representation displayed in the top-most semi-transparent window using the display.

## Description

### FIELD OF TECHNOLOGY

The present disclosure relates to providing input to portable electronic devices, including but not limited to portable electronic devices having touch screen displays and, more specifically, to a user-interface using semi-transparent, layered windows for selecting input in such devices.

### BACKGROUND

Electronic devices, including portable electronic devices, have gained widespread use and may provide a variety of functions including, for example, telephonic, electronic messaging, and other personal information manager (PIM) application functions. Portable electronic devices include, for example, several types of mobile stations such as simple cellular telephones, smart telephones, wireless personal digital assistants (PDAs), and laptop computers with wireless communication capabilities based on, for example, the 802.11 or Bluetooth® communications protocols.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices to facilitate portability, touch-sensitive displays continue to decrease in size.

The decrease in the size of the portable electronic devices and their display areas has resulted in screens overloaded with information. For example, when using electronic devices with a reduced keyboard, disambiguation results often obscure text already composed by the user. Displays for accessing special characters also cover much of the screen. Furthermore, accessing special characters and other symbols, such as emoticons, can be cumbersome because the user must interrupt the typing process to search for special keys, perform special keystroke combinations, or use menus to input special characters and other symbols.

### BRIEF DESCRIPTION OF THE DRAWINGS

The accompanying drawings, which are incorporated in and constitute a part of this specification, illustrate several example embodiments of the present disclosure. In the drawings:

Figure 1 is a block diagram of a portable electronic device, consistent with disclosed example embodiments;

Figure 2 is a top plan view of a portable electronic device, consistent with disclosed example embodiments;

Figure 3 is a flow diagram of an example process using a layered user-interface to select representations, consistent with disclosed example embodiments;

Figures 4, 5, and 6A-B each show an example output of an improved portable electronic device for selecting representations, consistent with disclosed example embodiments;

Figures 7 to 9 each show an example output created during a process to select representations, consistent with disclosed example embodiments;

Figure 10 is a flow diagram of an example process for selecting text shortcuts, consistent with disclosed example embodiments;

Figures 11 to 13 each show an example output of an improved portable electronic device for selecting emoticons, consistent with disclosed example embodiments; and

Figures 14 to 16 each show an example output of an improved portable electronic device used to display text disambiguation options, consistent with disclosed example embodiments.

### DETAILED DESCRIPTION

Reference will now be made in detail to the exemplary embodiments of the invention, examples of which are illustrated in the accompanying drawings. For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to a portable electronic device. Examples of portable electronic devices include mobile, or handheld, wireless communication devices such as pagers, cellular phones, cellular smart-phones, wireless organizers, personal digital assistants, wirelessly enabled notebook computers, netbooks, tablets, and so forth. The portable electronic device may also be a portable electronic device without wireless communication capabilities, such as a handheld electronic game device, digital photograph album, digital camera, or other portable device.

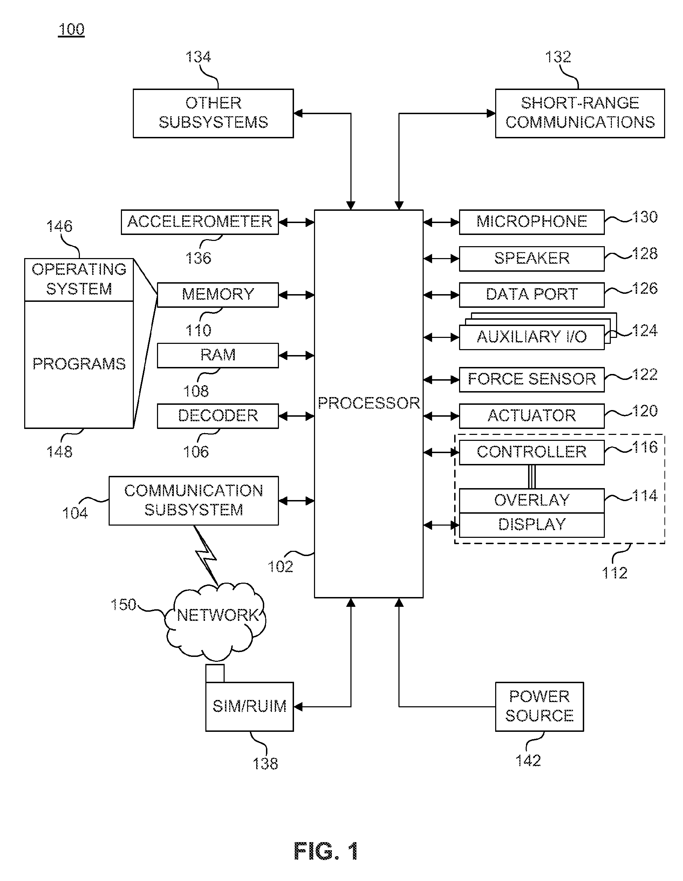

A block diagram of an example of a portable electronic device 100 is shown in Figure 1. Portable electronic device 100 includes multiple components, such as processor 102 that controls the overall operation of the portable electronic device 100. Processor 102 may be, for instance, and without limitation, a microprocessor (µP). Communication functions, including data and voice communications, are performed through communication subsystem 104. Data received by the portable electronic device 100 is optionally decompressed and decrypted by a decoder 106. Communication subsystem 104 receives messages from and sends messages to a wireless network 150. Wireless network 150 may be any type of wireless network, including, but not limited to, data wireless networks, voice wireless networks, and networks that support both voice and data communications. Power source 142, such as one or more rechargeable batteries or a port to an external power supply, power portable electronic device 100.

Processor 102 interacts with other components, such as Random Access Memory (RAM) 108, memory 110, and display 112. In example embodiments display 112 has a touch-sensitive overlay 114 operably connected or coupled to an electronic controller 116 that together comprise touch-sensitive display 112. Processor 102 interacts with touch-sensitive overlay 114 via electronic controller 116. User-interaction with a graphical user interface is performed through the touch-sensitive overlay 114. Information, such as text, characters, symbols, images, icons, and other items that may be displayed or rendered on portable electronic device 100, are displayed on the touch-sensitive display 112 via the processor 102. Although described as a touch-sensitive display with regard to Figure 1, display 112 is not limited to a touch-sensitive display and can include any display screen for portable devices.

Processor 102 also interacts with one or more actuators 120, one or more force sensors 122, auxiliary input/output (I/O) subsystem 124, data port 126, speaker 128, microphone 130, short-range communications 132, and other device subsystems 134. Processor 102 interacts with accelerometer 136, which may be utilized to detect direction of gravitational forces or gravity-induced reaction forces.

To identify a subscriber for network access, portable electronic device 100 uses a Subscriber Identity Module or a Removable User Identity Module (SIM/RUIM) card 138 for communication with a network, such as wireless network 150. Alternatively, user identification information may be programmed into memory 110.

Portable electronic device 100 includes operating system 146 and software programs or components 148 that are executed by the processor 102 and may be stored in a persistent, updatable store such as memory 110. Additional applications or programs are loaded onto portable electronic device 100 through the wireless network 150, auxiliary I/O subsystem 124, data port 126, short-range communications subsystem 132, or any other suitable subsystem 134.

A received signal such as a text message, an e-mail message, or web page download is processed by communication subsystem 104 and input to processor 102. Processor 102 processes the received signal for output to display 112 and/or to auxiliary I/O subsystem 124. A subscriber may generate data items, for example e-mail or text messages, which may be transmitted over wireless network 150 through communication subsystem 104. For voice communications, the overall operation of the portable electronic device 100 is similar. Speaker 128 outputs audible information converted from electrical signals, and microphone 130 converts audible information into electrical signals for processing. Speaker 128, display 112, and data port 126 are considered output apparatus of device 100.

A touch-sensitive display 112 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes capacitive touch-sensitive overlay 114. Overlay 114 is an assembly of multiple layers in a stack including, for example, a substrate, a ground shield layer, a barrier layer, one or more capacitive touch sensor layers separated by a substrate or other barrier, and a cover. The capacitive touch sensor layers are any suitable material, such as patterned indium tin oxide (ITO).

One or more touches, also known as touch contacts, touch events, or actuations, are detected by touch-sensitive display 112. The processor 102 or controller 116 determines attributes of the touch, including a location of a touch. Touch location data includes an area of contact or a single point of contact, such as a point at or near a center of the area of contact. The location of a detected touch may include x and y components, e.g., horizontal and vertical components, respectively, with respect to one's view of touch-sensitive display 112. For example, the x location component may be determined by a signal generated from one touch sensor, and the y location component may be determined by a signal generated from another touch sensor. A signal may be provided to controller 116 in response to detection of a touch. A touch may be detected from any suitable object, such as a finger, thumb, appendage, or other items, for example, a stylus, pen, or other pointer, depending on the nature of touch-sensitive display 112. Multiple simultaneous touches or gestures are also detected. These multiple simultaneous touches may be considered chording events.

In some example embodiments, one or more actuators 120 may be depressed by applying sufficient force to the touch-sensitive display 112 to overcome the actuation force of the actuator 120. Actuator 120 is actuated by pressing anywhere on touch-sensitive display 112. Actuator 120 provides input to the processor 102 when actuated. Actuation of the actuator 120 results in provision of tactile feedback.

In certain embodiments, a mechanical dome switch may be utilized as one or more of actuators 120. In this example, tactile feedback is provided when the dome collapses due to imparted force and when the dome returns to the rest position after release of the switch.

Alternatively, actuator 120 may comprise one or more piezoelectric (piezo) devices that provide tactile feedback for the touch-sensitive display 112. Contraction of the piezo actuators applies a spring-like force, for example, opposing a force externally applied to the touch-sensitive display 112. Each piezo actuator includes a piezoelectric device, such as a piezoelectric (PZT) ceramic disk adhered to a metal substrate. The metal substrate bends when the PZT disk contracts due to build up of charge at the PZT disk or in response to a force, such as an external force applied to touch-sensitive display 112. The charge may be adjusted by varying the applied voltage or current, thereby controlling the force applied by the piezo disks. The charge on the piezo actuator may be removed by a controlled discharge current that causes the PZT disk to expand, releasing the force thereby decreasing the force applied by the piezo disks. The charge may advantageously be removed over a relatively short period of time to provide tactile feedback to the user. Absent an external force and absent a charge on the piezo disk, the piezo disk may be slightly bent due to a mechanical preload. Actuator 120, touch-sensitive display 112, force sensor 122, microphone 130, and data port 126 are input apparatuses for device 100.

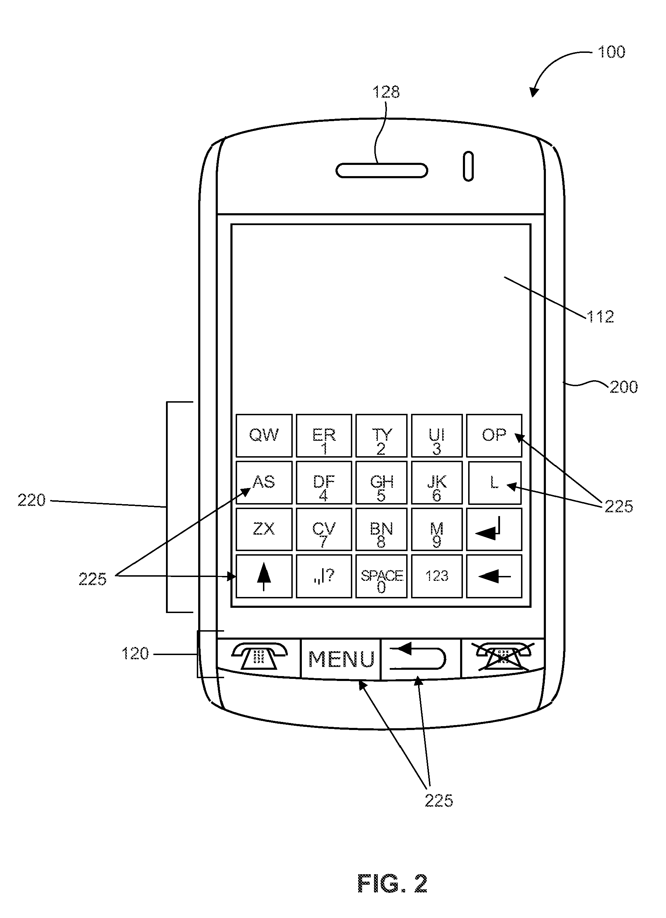

A top plan view of portable electronic device 100 is shown generally in Figure 2. Example portable electronic device 100 includes housing 200 in which various components as shown in Figure 1 are disposed. For example, various input apparatuses and output apparatuses, processor 102, and memory 110 for storing at least programs 148 are disposed in housing 200. Processor 102 is responsive to input signals from input apparatuses, such as the display 112 or actuator 120, and optionally provides output signals to output apparatuses, such as the display 112 or speaker 128. Processor 102 also interfaces with memory 110 and is enabled to execute programs 148.

As can be understood from Figure 2, the output apparatus includes display 112 and speaker 128, each of which are responsive to one or more output signals from processor 116 or processor 102. The input apparatuses includes keyboard 220. As described above, input members 225 on keyboard 220 may be rendered on touch-sensitive display 112. For example, each input member can be defined by specific coordinates of display 112. Alternatively, input members 225 are mechanical keys using, for example, a mechanical dome switch actuator or a piezoelectric actuator. In certain embodiments, input members 225 may form a QWERTY keyboard or other known keyboard layouts, either in reduced or full format. In a reduced keyboard layout, input members are assigned a number of characters . In other example embodiments, input members 225 may form an alphabetical keyboard layout. Whether input members 225 are rendered using touch sensitive display 112 or are mechanical, input members 225 may be capable of a press-and-hold operation. In a press-and-hold operation a user actuates (presses) the input member and continues pressing the input member for a period of time. Processor 102 or controller 116 are configured to detect a first input when input member is pressed and a second input when the user continues to press an individual input member.

In the presently described example embodiment shown in Figure 2, each input member 225 corresponds to a number of characters or other linguistic elements. Input members 225 as shown in Figure 2 correspond generally to three characters, with some input members corresponding to two or one characters. However, in other example embodiments, keyboard 220 corresponds to a full keyboard, and each input member 225 corresponds generally to only one character. As used herein, characters refers to letters, numbers, or symbols found on a keyboard. Special characters refers broadly to letters, numbers, or symbols that are part of a font, but not necessarily displayed on the keyboard, such as accented letters, diacritics or foreign currency symbols.

Although not shown in Figure 2, handheld electronic device 100 may include other input apparatuses, such as a scroll wheel, an optical trackpad, or a ball located either on the face or side of device 100. These input apparatuses provide additional input processor 102. For example, a scroll wheel may provide one input to processor 102 when rotated and a second input to processor 102 when actuated. An optical trackpad may provide one input to processor 102 when swiped and a second input to processor 102 when pressed or tapped. Input members 225, actuators 120, and other input apparatuses, such as a scroll wheel or trackpad, are generally considered input members.

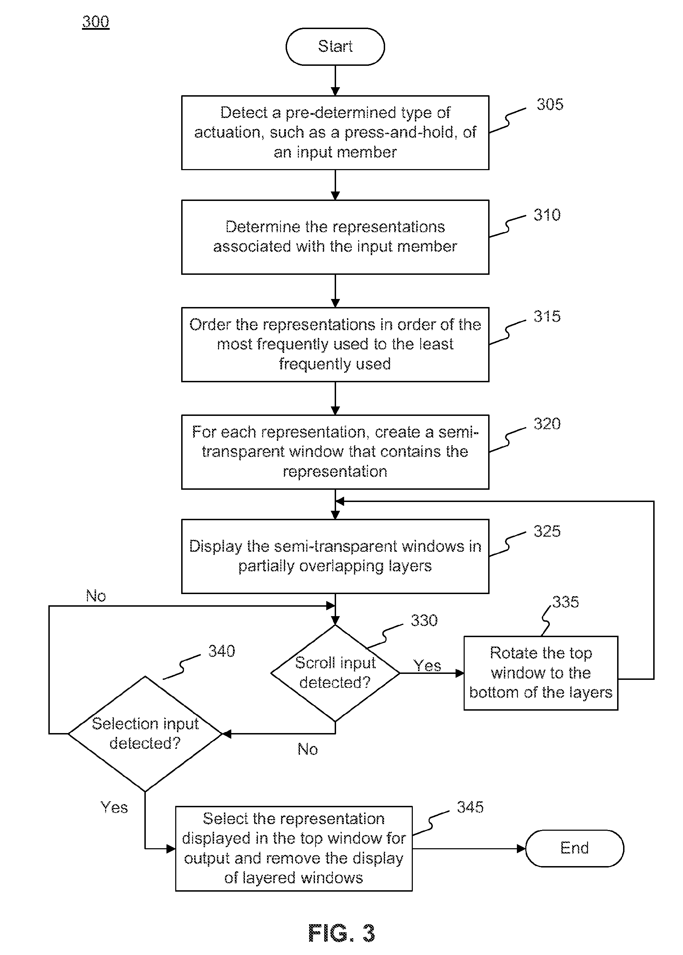

Figure 3 is a flow diagram of an example process 300 using a layered user-interface to select a special character, consistent with disclosed example embodiments. The method is carried out by software or firmware, for example as part of programs 148, that is stored in Random Access Memory (RAM) 108 or memory 110, and is executed by, for example, the processor 102 as described herein, or by controller 116. Process 300 is used to select representations associated with the characters corresponding to an input member for output to an output apparatus. Representations include accented characters, symbols, special characters, or punctuation marks. Representations may also include text shortcuts, such as emoticons or chat acronyms used, for example, in short message service (SMS), instant message (IM), or BlackBerry Messenger ® (BBM) sessions, that begin with a character corresponding to the input member. The process is used to select a representation using as little display 112 space as possible while still presenting multiple options to the user.

At Step 305, processor 102 detects a pre-determined type of actuation of an input member. As employed herein, the expression "actuation" and variations thereof shall refer broadly to any way of activating an input member, including pressing down on, tapping, or touching the input member. In certain embodiments, the pre-determined type of actuation is a press-and-hold of the input member. In other example embodiments, the pre-determined type of actuation includes chording of the input member and another input member. For example, such a chording could consist of pressing the input member associated with the character "E" and the "Enter" input member at the same time. In some example embodiments the actuation includes a specific sequence, such as the entry of a punctuation mark used to complete a sentence followed by the entry of a "space" input member.

At Step 310, processor 102 determines the representations that are associated with the actuated input member. In certain embodiments, the representations include accented characters. For example the representations of "è," "é," "ê," and "ë" may be associated with the input member for the character "e." A representation may also include symbols, such that the dollar sign "$" is associated with the input member for the character "d." In other example embodiments representations also include emoticons. For example, 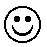 (happy face) and 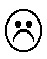 (sad face) may be associated with the input member for the colon ":" character, which is the character that begins the text equivalent of these emoticons, namely ":)" and ":(". In yet other example embodiments, all emoticons are associated with the input member for the colon character, not just those that start with a colon. A representation may also include chat acronyms, such that LOL, L8R, and LMK are associated with the input member for the character "L." In other example embodiments, punctuation marks used at the end of a sentence are representations associated with the period input member. Memory 110 stores a table of the representations associated with each input member.

At Step 315, processor 102 optionally orders the representations so that the most frequently used representation appears first in a list. As previously described, memory 110 stores an association between a representation and an input member. In addition, memory 110 also stores a frequency object for each representation. In the example embodiment presently described, processor 102 orders the representations based on the frequency objects. In addition, processor 102 updates the frequency objects when a user selects a representation. Thus, the frequency objects may reflect the frequency with which a user uses a particular representation. In other example embodiments, processor 102 orders the representations so that the most probable representation appears first in a list. In such embodiments, processor 102 uses a dictionary, wordlist, vocabulary, or other corpus of words, stored in memory 110, to determine what representation is most likely to come next, given what has already been input by the user.

In Step 320, processor 102 creates a semi-transparent window for each representation. A window is a designated display area rendered on display 112. Next, in Step 325, processor 102 displays the semi-transparent windows in partially overlapping (offset) layers. Such a layered user-interface allows the user to clearly see not only the representation on the top layer, but also the representation contained in the window(s) just under the top window, thereby economizing display area. In some example embodiments, the user is also capable of viewing the representations even further down in the layers. The offset allows a user to see the representation through the top window. Rather than appearing directly behind the representation in the top window, the offset allows the representation in the window behind the top window to appear, for example, slightly higher and to the right of the representation in the top window.

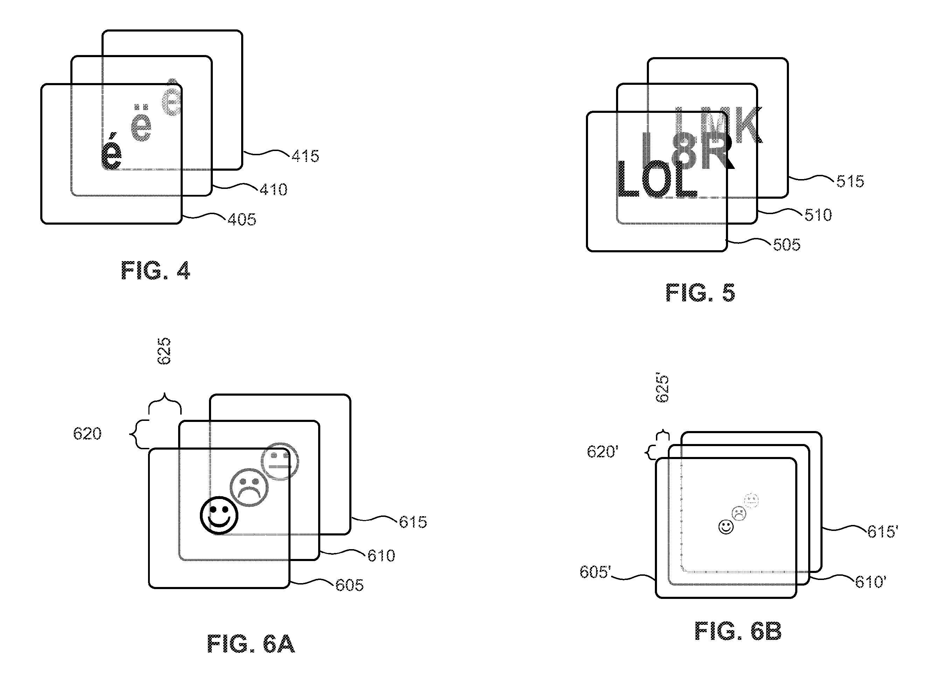

Figures 4-6 each show an example layered user-interface of semi-transparent offset windows, in accordance with example embodiments described herein. As seen in Figure 4, the top semi-transparent window 405 contains a representation of an "é" character. Behind it, window 410 contains a representation of an "ë" character. As seen in Figure 4, the character "ë" in a subsequent semi-transparent window 410 is visible through semi-transparent window 405. Other representations may be visible through windows 405 and 410, although the representations would be fainter than the "ë" of window 410 as the layers progress. Figure 5 shows chat acronyms in a layered user-interface of semi-transparent windows in offset layers. Figures 6A and 6B show emoticons in such a layered user-interface. The amount of screen space used by the layers depends on the amount of offset. The smaller the offset, the less screen space needed by the layers of windows. For example, the representations in Figure 6A are larger than the representations in Figure 6B. Because of this, offsets 620 (in a y direction) and 625 (in an x direction) of Figure 6A are larger than offsets 620' and 625' of Figure 6B. This occurs because more space is needed to move the representation in window 610 above and to the right of the representation in window 605 than is needed to move the representation in window 610' above and to the right of the representation in window 605'. Although offsets 620 and 625 are shown equal in size in Figure 6A, the offsets need not be of equal size. The offset is generally determined by the amount of space needed to make the representation in window 410 appear above or adjacent to the representation in window 405.

In Step 330, processor 102 determines if a scroll input has been detected. In some example embodiments, a scroll input is detected when the actuated input member is still being held after a pre-determined length of time. For example, the display of Figure 4 appears after a press-and-hold actuation of the input member for the character "e." When the user continues to hold the input member for the character "e," after one second, for example, processor 102 determines this constitutes a scroll input. In some example embodiments where the pre-determined type of actuation includes chording, processor 102 determines a scrolling input has been received through actuation of a down or up arrow, use of a scroll wheel, track pad, track ball, optical mouse, gesturing on a touch screen, or any other input commonly used for scrolling. If the scrolling input has been detected (Step 330, Yes), then processor 102 causes the top window to move to the bottom of the layers. In an example using Figure 4, processor 102 moves window 405 with the "é" representation to the position behind window 415. This results in window 410 with the "ë" representation displayed on the top layer. In certain embodiments, a representation in the top window is considered marked for selection. Thus, after the movement of window 405 to the bottom, the representation in window 410 is marked for selection.

If no scroll input is detected (Step 330, No) then, in Step 340, processor 102 determines whether a selection input has been received. If no selection input has been received (Step 340, No), then processing continues at step 330, with processor 102 awaiting further input. If a selection input has been received (Step 340, Yes), then in Step 345, processor 102 selects the representation displayed in the window in the top layer for output to the output apparatus as the desired input and removes the display of semi-transparent layered windows. In certain embodiments, a selection input includes releasing the actuated input member. In other example embodiments, where the pre-determined type of actuation includes chording, a selection input includes using the "Enter" input member, tapping or touching on touch-sensitive display 112, or an optical trackpad selection.

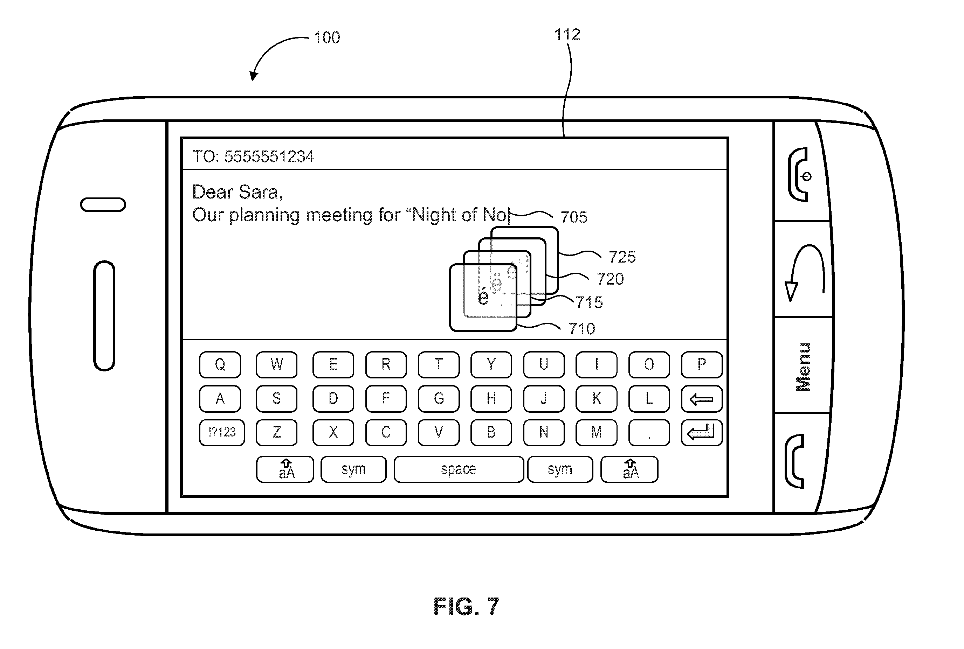

An example of a process using a layered user-interface to select a character with an accent mark will now be explained using Figures 7 through 9. A user enters text for a message, such as the message shown in Figure 7. In the example of Figures 7 to 9, the user desires to type the word "Noël" as part of the message. After the user types the first two characters of "Noël," processor 102 awaits the next input, with cursor 705 marking the position of the next text entry, as shown in Figure 7. To enter the next character, the user may press-and-hold the input member used to input the character "e." Processor 102, recognizing this as a pre-determined type of actuation, then retrieves the representations associated with the "e" input member, and creates the layered display seen in Figure 7, items 710, 715, 720, and 725.

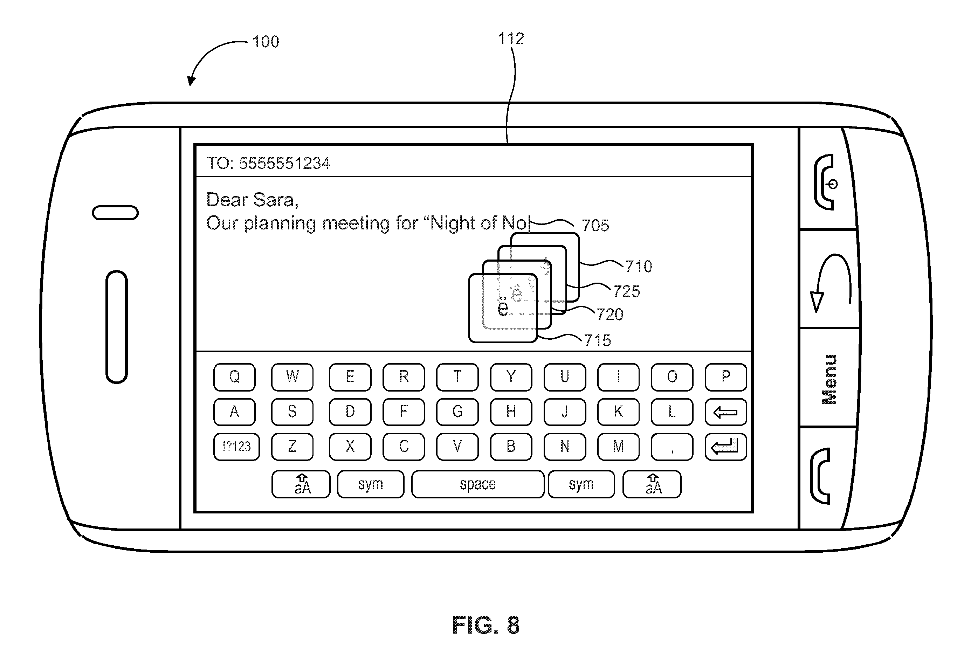

The "é" representation shown in window 710 is not the character desired by the user, so the user continues to press-and-hold the "e" input member. After a pre-determined amount of time, such as one second, processor 102 detects that the user is still holding (pressing on) the input member associated with character "e", and recognizes this as a scroll input. Detection of the scroll input causes processor 102 to move the top window, currently window 710, to the bottom of the layers. Figure 8 shows an example of the display that results from the movement of window 710 to the bottom layer.

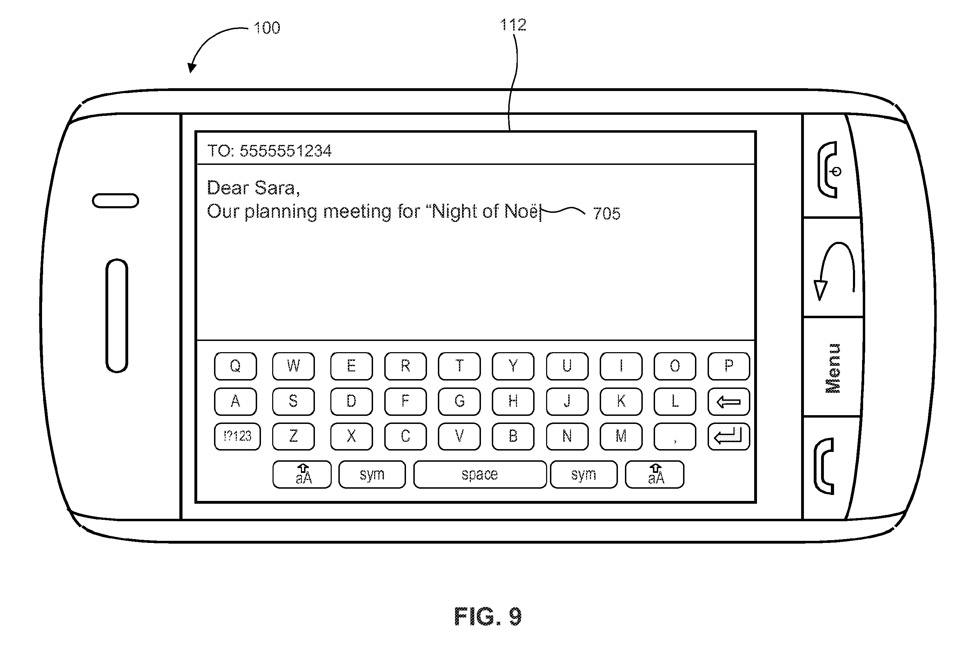

The transparency of the windows aids the user in determining when to release the pressed input member, because the user is able to see what character or other symbol will be on top after the next rotation. When the user sees that the correct character is showing in the top layer, the user releases the "e" input member. When processor 102 detects the release of the input member, it interprets this as the receipt of a selection input. After receiving the selection input, processor 102 inserts the "ë" at the position of cursor 705, resulting in the display shown in Figure 9. While this example used a press-and-hold as the pre-determined type of actuation, other types of actuations may be used in the process.

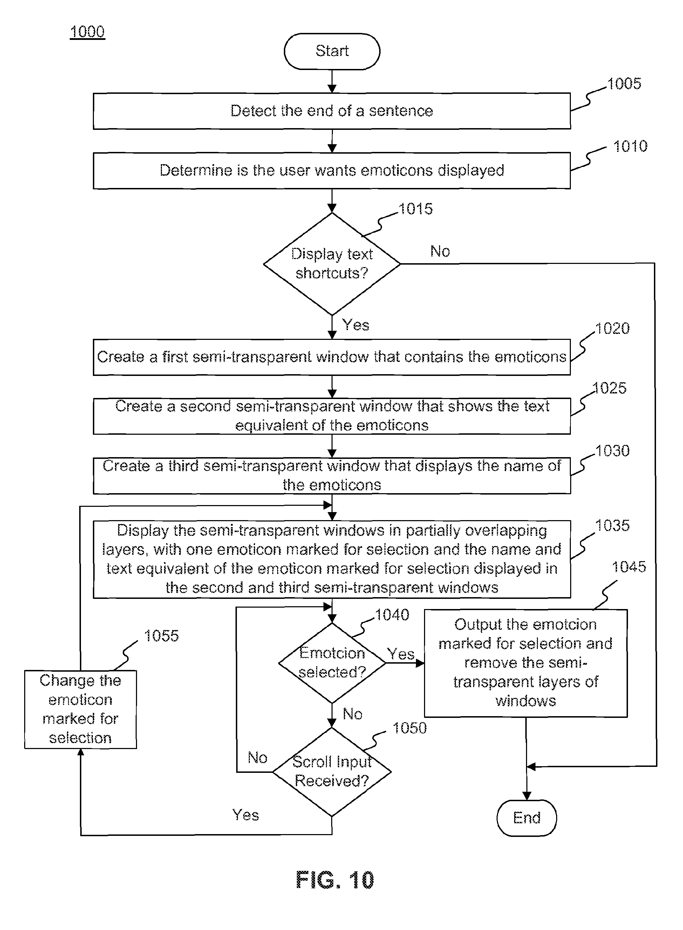

Figure 10 is a flow diagram of another example input selection process used to select text shortcuts, such as emoticons or chat acronyms, consistent with disclosed example embodiments. The process is carried out by software or firmware, stored as part of programs 148 that is stored in Random Access Memory (108) or memory 110, and is executed by, for example, processor 102 or controller 116. This process is used to select for output text shortcuts, such as emoticons or chat acronyms, that often occur at the beginning or end of a sentence. The process is used to select these types of representations while using as little display 112 space as possible while still presenting multiple options to the user.

In Step 1005, processor 102 detects an end of a sentence. For example, the end of a sentence may be detected by detecting an actuation of one or more input members used to mark the end a sentence followed by a space. Such punctuation marks may include a period, a question mark, or an exclamation mark. In Step 1010, processor 102 determines whether the user wants text shortcuts displayed. In certain embodiments, the user indicates through keyboard options that emoticons and chat acronyms should not be automatically displayed. In other example embodiments, the user indicates that representations such as emoticons and chat acronyms should never be displayed.

If the user does not desire text shortcuts to be displayed (Step 1015, No), the process ends. But if the user indicates text shortcuts may be displayed (Step 1015, Yes), then in Step 1020, processor 102 creates a first semi-transparent window that contains a plurality of text shortcuts, such as emoticons. In certain embodiments, one of the emoticons is marked for selection. Such a marking includes, but is not limited to, a box around the emoticon, a different background color for the emoticon, or the emoticon appearing larger than the other emoticons. In other example embodiments, a plurality of chat acronyms is displayed instead of emoticons.

In Step 1025, processor 102 creates a second semi-transparent window that contains the text equivalents of the plurality of emoticons in the first semi-transparent window. In Step 1030, processor creates a third semi-transparent window that contains the names of the plurality of emoticons contained in the first window.

In Step 1035, processor 102 displays multiple (three in one embodiment) semi-transparent windows in partially overlapping (offset) layers. For example, the first window with the plurality of emoticons appears on top and the text equivalent and name of the emoticon marked for selection appears through the first semi-transparent window. In certain embodiments, the user selects which of the three windows is displayed on top by default. For example, if a user desires to see the text equivalents on top, processor 102 displays a window showing the text equivalents of the emoticons on top, and the emoticons and the emoticon names appear in semi-transparent windows behind the text equivalent window. In such embodiments, one of the text equivalents is marked for selection and the emoticon and name corresponding to the text equivalent marked for selection are seen through the top window. In other example embodiments, the user may desire to see the names on the top window, with the emoticons and the text equivalents displayed in the lower layers. In such embodiments, the emoticon and the text equivalent corresponding to the name marked for selection would show through the top window.

In Step 1040, processor 102 determines if a selection input has been received. If so (Step 1040, Yes), then in Step 1045, the emoticon marked for selection is output and the semi-transparent layers of windows are removed from the display. If not (Step 1040, No), in Step 1050, processor 102 determines if a scroll input has been received. If so (Step 1050, Yes), in Step 1055, processor 102 changes the emoticon marked for selection and then returns to Step 1035 to re-create the display of the layered windows. For example, if the emoticon marked for selection changes from 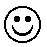 (a smile) to 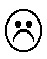 (a sad face), then processor 102 causes the name and text equivalent of the 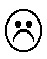 (sad face) emoticon to show behind the top window. If no scroll input is detected (Step 1050, No), processor 102 waits for further input.

In certain embodiments, processor 102 receives a window scroll input (not shown in Figure 10). As described above, the window scroll input may include a chording, such as holding down a "Shift" or "Control" input member while pressing an up or down arrow or using a mouse, trackball, optical pad, or scroll wheel. The window scroll input may also include an up and down scrolling on a mouse, optical pad, or trackball while a side-to-side motion may be used as the scroll input to change the emoticon marked for selection. When processor 102 receives a window scroll input, it causes the top semi-transparent window to move to the bottom of the layers. Using a window scroll input a user changes the window displayed on top between the emoticon window, the text equivalent window, and the name window.

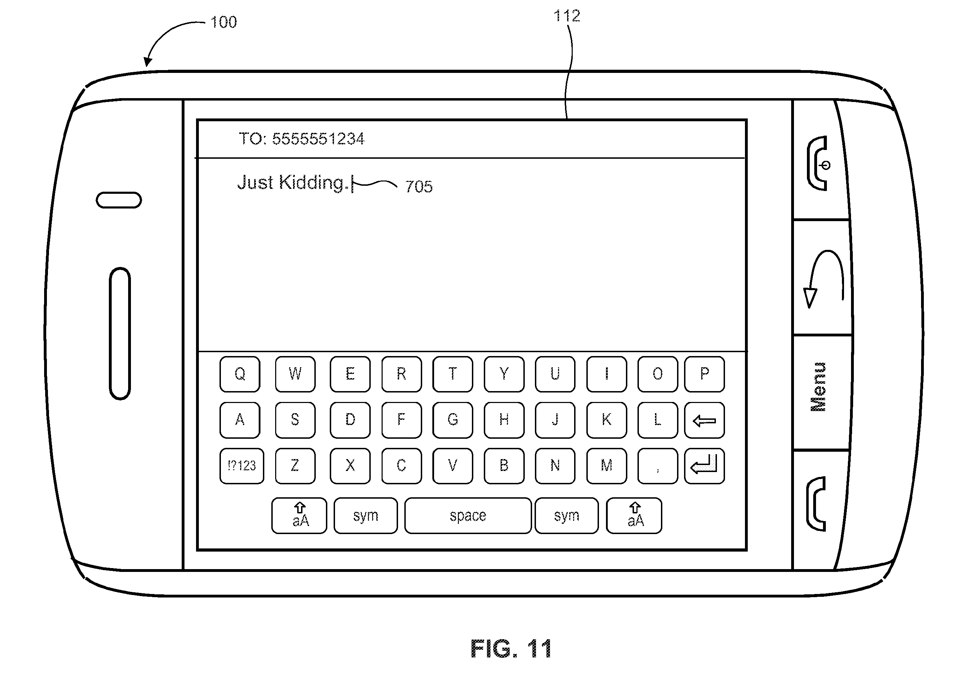

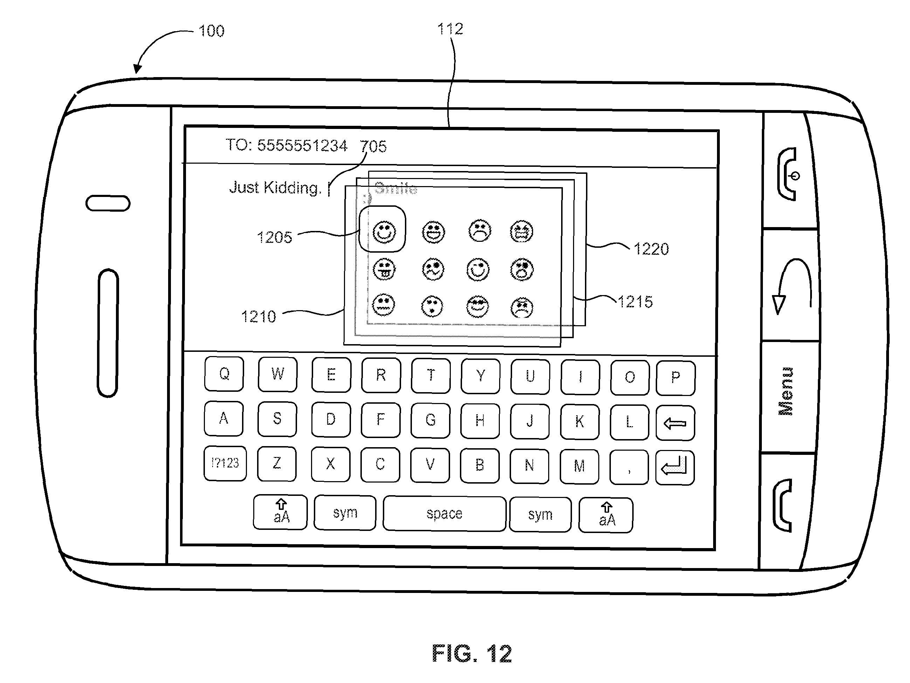

An example of a process using a layered user-interface to select an emoticon will now be explained using Figures 11-13. A user may type a text message, as shown in Figure 11. The position of cursor 705 demonstrates where the next output will appear in the message. As shown in Figure 11, the user types the phrase "Just kidding. " and in response processor 102 detects the end of a sentence by detecting that the user has entered a period followed by a space. Processor 102 also detects the end of a sentence when other sentence delimiters, such as a question mark and a space or an exclamation mark and a space are entered. Once processor 102 detects the end of a sentence, processor 102 creates a display of emoticons, text equivalents of emoticons, and emoticon names in semi-transparent, layered windows, as shown in Figure 12.

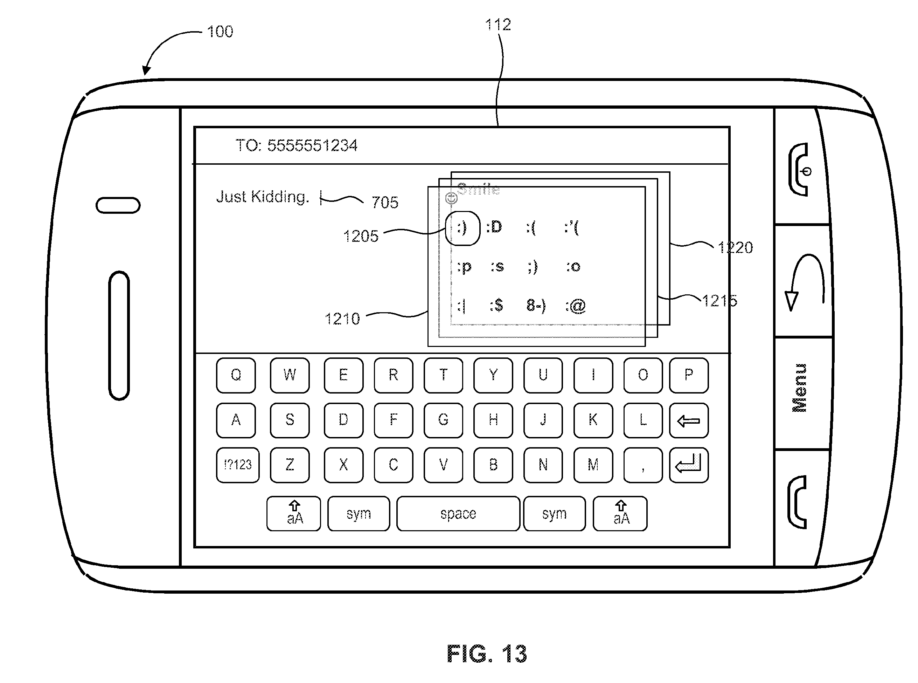

One such emoticon is marked for selection, as shown, for example, by box 1205. The display of semi-transparent, layered windows includes window 1210, which displays emoticons, window 1215, which displays the text equivalent of the emoticon marked for selection, and window 1220, which displays the name of the emoticon marked for selection. The user uses a scroll input to change the emoticon marked for selection, or uses a window scroll input to make window 1210 move behind window 1220, causing window 1215 to be displayed on top. When window 1215 is displayed on top, a plurality of text equivalents for emoticons are displayed, with the name and the emoticon corresponding to the text equivalent marked for selection visible through window 1215, as shown in Figure 13.

Returning to Figure 12, processor 102 next receives a selection input from the user. After receiving the selection input, processor 102 outputs the selected emoticon at the position of cursor 705. If the text equivalents in window 1215 are displayed as the top window, as shown in Figure 13, selection of a text equivalent still causes processor 102 to output the corresponding emoticon at the position of cursor 705 instead of the text equivalent. In other example embodiments, selection of a text equivalent will cause processor 102 to output the text equivalent at the position of cursor 705.

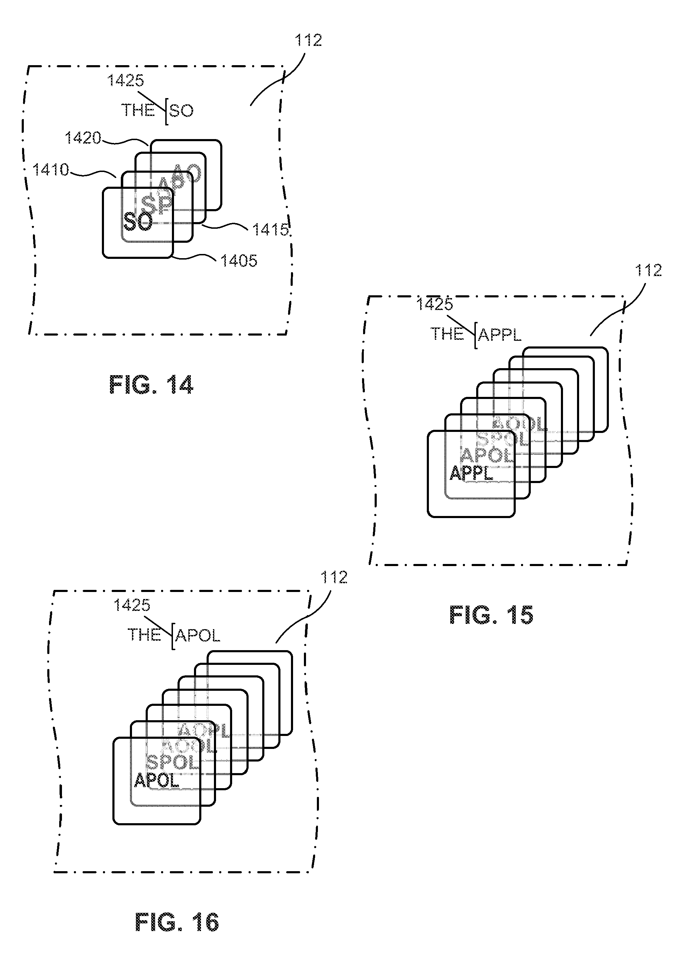

Figures 14 to 16 show example output of an improved portable electronic device used to display text disambiguation options, consistent with disclosed example embodiments. In portable electronic devices using a reduced keyboard, each input member is assigned to a number of characters, usually two or three characters. When such an input member is actuated, the result is an ambiguous input because it is not immediately clear what character the user intends to output. Inputting text on such a keyboard commonly uses one of two methods. In the first method a user uses a multi-tap method to enter the character desired by pressing an input member in rapid succession one time for the first character, two times for the second, three times for the third and so on.

The second method is for the handheld device to predict the word desired using stored data on common words and the frequency with which the words occur in the language. Using a disambiguation system, for example, as a user types processor 102 determines the possible letter combinations, or permutations, for the characters represented by the input members actuated. Processor 102 then compares these combinations to language objects, such as words, common character combinations (n-grams), and the frequencies with which these language objects occur in the language stored in static and custom dictionaries. Such language objects and frequency objects are stored, for example, in memory 110.

Processor 102 displays the most probable character combinations, or permutations, in a list on the screen as the user types. In some circumstances, a user may need to select a specific combination of characters, also called a prefix, locking the prefix. When a prefix is locked, further combination of characters represented by actuations of additional input members are added to the prefix. Further description of how a disambiguation function works is found in U.S. Patent Application No. 11/098,783, the specification of which is incorporated herein by reference.

The various permutations of the characters assigned to input members are displayed in semi-transparent, layered windows, as shown in Figures 14-16. For example, if a user actuates input members labeled "AS" and "OP", the input is ambiguous and represented by four permutations of characters: "SO," "SP," "AP," and "AO." Processor 102 generates these permutations based on the characters assigned to the input member and the order in which the input members are actuated.

Processor 102 presents these permutations to the user in semi-transparent, layered windows 1405-1420, as shown in Figure 14. "SO" occupies the top window because it has the highest frequency object of the four permutations, because it represents a full word, or because it is the most probable permutation given one or more words preceding the current input. The user can see "SP" through window 1405, and "AP" through windows 1405 and 1410. The user can scroll the windows using any input members traditionally used to navigate a list of permutations for disambiguation. Furthermore, the user is able to select the permutation shown in the top window, thus locking the prefix for further disambiguation.

Next, if the user actuates the "OP" input member again and then the input member for "L," the character permutations include "APPL," "APOL," "SPOL," "AOOL," "AOPL," "SOPL", and "SOOL." Processor 102 displays these permutations on display 112 as seven semi-transparent, layered windows, as shown in Figure 15. "APPL" appears in the top layer because it is associated with a language object with the highest frequency or because it is the most probable permutation given one or more preceding words. If the user enters a scrolling input, for example actuating a down arrow or using a track wheel, then "APOL" is displayed on in the top window, as shown in Figure 16. In response, processor 102 changes default portion 1425 to reflect the new permutation.

Those of skill in the art of disambiguation will realize that this method of displaying permutations is used for as many permutations as needed, and continues until the user selects a word or enters a delimiter. The overlapping nature of the windows allows the portable handheld device to display as many permutations as needed without using much screen space. The transparency of the windows allows the user to anticipate the next selection, reducing the chances that the user will scroll past the desired permutation.

The present disclosure may be embodied in other specific forms without departing from its spirit or essential characteristics. Other embodiments of the invention will be apparent to those skilled in the art from consideration of the specification and practice of the invention disclosed herein. The described embodiments are to be considered in all respects only as illustrative and not restrictive, with the true scope and spirit of the invention being indicated by the following claims rather than by the foregoing description. All changes that come within the meaning and range of equivalency of the claims are to be embraced within their scope.

## Claims

1. A method of selecting input in a portable electronic device (100) comprising a display (118) and a plurality of input members (225), the method comprising:
detecting a pre-determined type of actuation (305) of at least one of the plurality of input members;
determining a plurality of representations (310) associated with the actuated input member;
outputting the plurality of representations on the display, each representation of the plurality of representations appearing in a semi-transparent window, the plurality of semi-transparent windows being output in partially overlapping layers (405, 410, 415);
receiving a selection input (340); and
outputting a representation on the display, the representation being in a semi-transparent window that is a top layer of the layers (345).

2. The method of claim 1, wherein the pre-determined type of actuation is a press-and-hold of the actuated input member and the selection input is a release of the actuated input member.

3. The method of claim 1 or claim 2, wherein the plurality of representations include a plurality of accented characters corresponding to at least one character associated with the actuated input member.

4. The method of any preceding claim, wherein the plurality of representations include a plurality of emoticons, each emoticon beginning with a character associated with the actuated input member.

5. The method of any preceding claim, wherein the plurality of representations include a plurality of short message service abbreviations, the first character of each abbreviation associated with a character associated with the actuated input member.

6. The method of any preceding claim wherein the pre-determined type of actuation is an actuation corresponding with the end of a sentence.

7. The method of claim 6, wherein the plurality of representations include a plurality of punctuation marks.

8. The method of claim 6 or claim 7, wherein the plurality of representations include a plurality of emoticons.

9. The method of any preceding claim, further comprising:
detecting a pre-determined input; and
in response to detecting the input, modifying the output of the semi-transparent windows so that the semi-transparent window that is the top layer moves to a back layer of the layers.

10. The method of claim 9, wherein the pre-determined input includes continuing to press-and-hold the actuated input member for a pre-determined amount of time.

11. A computer-readable medium having computer-readable code executable by at least one processor of the portable electronic device to perform the method of any preceding claim.

12. A portable electronic device comprising:
a processor (102);
an output apparatus (118);
a plurality of input members (225); and
a memory (110) comprising a plurality of representations associated with at least some of the plurality of input members;
the processor being adapted to:
detect a pre-determined type of actuation (305) of at least one of the plurality of input members,
determine the plurality of representations associated with the actuated input member (310),
cause the output of the plurality of representations using the output apparatus, such that each representation of the plurality of representations appears in a semi-transparent window, the plurality of semi-transparent windows being output in partially overlapping layers (405, 410, 415),
receive a selection input (340), and
cause a representation to be output using the output apparatus, the representation being in a semi-transparent window that is a top layer of the layers (345).

13. The device of claim 12, wherein the pre-determined type of actuation is a press-and-hold of the actuated input member and the selection input is a release of the actuated input member.

14. The device of claim 12 or claim 13, wherein the processor is further adapted to:
detect a pre-determined input; and
in response to detecting the input, modify the output of the semi-transparent windows so that a semi-transparent window in a top layer of the layers moves to a back layer of the layers.

15. The device of any of claims 12 to 14, wherein the pre-determined input includes continuing to press-and-hold the actuated input member for a pre-determined amount of time and the selection input is a release of the actuated input member.

## Amended claims

### Amended claims in accordance with Rule 137(2) EPC.

**1.** A method of inputting data in a portable electronic device (100) comprising a display (118) and a plurality of input members (225), the method comprising:
detecting a pre-determined type of actuation (305) of at least one of the plurality of input members (225);
determining a plurality of representations (310) associated with the actuated input member, wherein the plurality of representations do not appear as part of the input member;
outputting partially overlapping semi-transparent windows (405, 410, 415) on the display (118), each window including a representation of the plurality of representations;
detecting a pre-determined input;
in response to detecting the pre-determined input, rearranging the semi-transparent windows (405, 410, 415) so that a first semi-transparent (405) window moves behind a second semi-transparent window (410);
receiving a selection input (340) that selects a representation in a semi-transparent window that is atop the partially overlapping windows (345); and
outputting the selected representation on the display (118) and removing the plurality of semi-transparent windows (405, 410, 415) from the display (118).

**2.** The method of claim 1, wherein the pre-determined type of actuation is a press-and-hold of the actuated input member.

**3.** The method of claim 1 or claim 2, wherein the plurality of representations include a plurality of accented characters corresponding to at least one character associated with the actuated input member.

**4.** The method of any preceding claim, wherein the plurality of representations include a plurality of emoticons, each emoticon beginning with a character associated with the actuated input member.

**5.** The method of any preceding claim, wherein the plurality of representations include a plurality of chat acronyms, the first character of each acronym being associated with a character associated with the actuated input member.

**6.** The method of any preceding claim wherein the pre-determined type of actuation is a sequence of actuations used to indicate the end of a sentence.

**7.** The method of claim 6, wherein the plurality of representations include a plurality of punctuation marks.

**8.** The method of claim 6 or claim 7, wherein the plurality of representations include a plurality of emoticons.

**9.** The method of claim 2, wherein the pre-determined input includes continuing to press-and-hold the actuated input member for a pre-determined amount of time.

**10.** The method of claim 2 or claim 9, wherein the selection input is a release of the actuated input member.

**11.** A computer-readable medium having computer-readable code executable by at least one processor of the portable electronic device (100) to perform the method of any preceding claim.

**12.** A portable electronic device (100) comprising:
a processor (102);
an output apparatus (118);
a plurality of input members (225); and
a memory (110) comprising a plurality of representations associated with at least some of the plurality of input members (225);
the processor being adapted to:
detect a pre-determined type of actuation (305) of at least one of the plurality of input members (225),
determine a plurality of representations associated with the actuated input member (310), wherein the plurality of representations do not appear as part of the input member,
cause the output of partially overlapping semi-transparent windows (405, 410, 415) using the output apparatus, each window including a representation of the plurality of representations,
detect a pre-determined input,
in response to detecting the pre-determined input, rearrange the semi-transparent windows (405, 410, 415) so that a first semi-transparent (405) window moves behind a second semi-transparent window (410),
receive a selection input (340) that selects a representation in a semi-transparent window that is atop the partially overlapping windows (345), and
cause the selected representation to be output using the output apparatus and cause the output apparatus to remove the output of the plurality of semi-transparent windows (405, 410, 415).

**13.** The device (100) of claim 12, wherein the pre-determined type of actuation is a press-and-hold of the actuated input member and the selection input is a release of the actuated input member.

**14.** The device (100) of claim 12 or claim 13, wherein the pre-determined type of actuation is a sequence of actuations used to indicate the end of a sentence.

**15.** The device (100) of any of claims 12 to 14, wherein the pre-determined input includes continuing to press-and-hold the actuated input member for a pre-determined amount of time and the selection input is a release of the actuated input member.
